(19) Europäisches Patentamt / European Patent Office / Office européen des brevets

(11) **EP 4 242 634 A1**

(12) **EUROPÄISCHE PATENTANMELDUNG**

(43) Veröffentlichungstag:
**13.09.2023   Patentblatt 2023/37**

(21) Anmeldenummer: **22020099.2**

(22) Anmeldetag: **10.03.2022**

(51) Internationale Patentklassifikation (IPC):
**G01N 21/03** (2006.01)    *G01N 21/3504* (2014.01)
**G01N 21/33** (2006.01)    *G01N 21/65* (2006.01)
**G01N 23/083** (2018.01)

(52) Gemeinsame Patentklassifikation (CPC):
**G01N 21/0317;** G01N 21/33; G01N 21/3504;
G01N 2021/651; G01N 2201/08

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Buck, Christian**
**64283 Darmstadt (DE)**

(72) Erfinder: **Buck, Christian**
**64283 Darmstadt (DE)**

(74) Vertreter: **Benz, Jürgen**
**Heumann**
**Rechts- und Patentanwälte**
**Spessartring 63**
**64287 Darmstadt (DE)**

(54) **VORRICHTUNG UND VERFAHREN ZUR SPEKTROSKOPISCHEN BESTIMMUNG VON ANALYTEN MIT VARIABLER DRUCKABHÄNGIGER EMPFINDLICHKEIT**

(57)   Die Erfindung betrifft eine Vorrichtung und ein Verfahren zur spektroskopischen Messung von Analyten. Die Erfindung betrifft weiterhin eine Vorrichtung und ein Verfahren zur qualitativen und quantitativen Bestimmung von Substanzen, beispielsweise Schadstoffen in Abgasen, die in kleinsten Mengen auftreten können und daher eine hohe Empfindlichkeit der optischen Messvorrichtungen voraussetzen. Die Erfindung betrifft insbesondere eine entsprechende Vorrichtung und ein Verfahren, mit welchen die messspezifische Empfindlichkeit der Vorrichtung durch definierte vorbestimmte Druckänderung eines gasförmigen oder dampfförmigen Analyten variabel geändert, und so den Eigenschaften des zu messenden Analyten angepasst werden kann.

FIG. 1

EP 4 242 634 A1

**Beschreibung**

Die Erfindung betrifft eine Vorrichtung und ein Verfahren zur spektroskopischen Messung von Analyten. Die Erfindung betrifft weiterhin eine Vorrichtung und ein Verfahren zur qualitativen und quantitativen Bestimmung von Substanzen, beispielsweise Schadstoffen in Abgasen, die in kleinsten Mengen auftreten können und daher eine hohe Empfindlichkeit der optischen Messvorrichtungen erfordern. Die Erfindung betrifft insbesondere eine entsprechende Vorrichtung und ein Verfahren, mit welchen die messspezifische Empfindlichkeit der Vorrichtung durch definierte vorbestimmte Druckänderung eines gasförmigen oder dampfförmigen Analyten variabel geändert und so den Eigenschaften des zu messenden Analyten angepasst werden kann.

Die Spektroskopie ist eine bewährte und schnelle Methode zur qualitativen und quantitativen Analyse vieler Elemente und Verbindungen in wässriger, gasförmiger oder fester Phase. Sie basiert meist auf der Schwächung einer Strahlung durch Wechselwirkung mit Atomen und/oder Molekülen. Optische Analyseverfahren ersetzen zunehmend die konventionelle chemische Analyse von Gasen. Sie nutzen den Effekt, dass Moleküle Licht bei spezifischen Wellenlängen absorbieren und haben den Vorteil, dass die Ergebnisse schnell zur Verfügung stehen. Der Nachweis von Gasen und die Bestimmung ihrer Konzentrationen sind in situ möglich, ohne dass Proben entnommen werden müssen. Derartige Verfahren sind deshalb für transiente chemische Prozesse oder schnell strömende Gase in der Regel gut geeignet.

Die dazu verwendeten Messgeräte bestehen im Wesentlichen aus einer Lichtquelle, einer offenen oder geschlossenen Küvette, welches von dem zu vermessenden Fluid durchströmt wird, einem System aus Analysator und Detektor zur spektralem Analyse des eingestrahlten Lichts sowie einem Gerät zur Datenerfassung und -übermittlung.

Als Lichtquelle werden oft Breitbandstrahler zur Messung von Molekülen oder Linienstrahler mit einer zum Analyten resonanten schmalbandigen Emissionslinie verwendet.

Die Lichtabsorption beim Durchstrahlen einer Probe hängt hauptsächlich von der Zusammensetzung / Struktur der Probe und der Frequenz des Lichts (Wellenlänge) ab. Entsprechend dem Lambert-Beer Gesetz ist die Intensität des durchstrahlten Lichtes durch die Probe proportional zum Absorptionskoeffizienten und der optischen Pfadlänge (Schickdicke der Probe).

Eine monochromatische Lichtquelle mit der Intensität $I_0$ passiert eine verdünnte Lösung einer speziellen chemischen Substanz der Schichtdicke d und resultiert in der Intensität $I_1$.

$$E_\lambda = \log_{10}\left(\frac{I_0}{I_1}\right) = \varepsilon_\lambda \cdot c \cdot d.$$

bzw.

$$I_1 = I_0 \times e^{-(\varepsilon \times c \times d)}$$

worin bedeuten:

- $I_0$: Intensität des einfallenden Lichtstrahls
- $I_1$: Intensität des transmittierten Lichtstrahls durch die Schichtdicke d
- d : Schichtdicke d, oder optische Pfadlänge (cm)
- c : Konzentration der absorbierenden Substanz
- $\varepsilon_\lambda$ : Molarer Extinktionskoeffizient bei spezifischer Wellenlänge $\lambda$ für diese Substanz
- $E_\lambda$ : Extinktion bei einer spezifischen Wellenlänge $\lambda$
- e : Eulersche Zahl (2,72)

Der Extinktionskoeffizient ist eine Konstante und unabhängig von (c) und für viele chemische Stoffe bekannt. Ein Extinktionskoeffizient ist eine naturgegebene Materialkonstante, deren Zahlenwert von Spezies zu Spezies über viele Größenordnungen variieren kann, die zu erfassende Konzentration c ist von der aktuellen analytischen Fragestellung abhängig und kann ebenfalls über viele Größenordnungen variieren. Im idealen Fall ist $(\varepsilon)$ unter kontrollierten Messbedingungen (z.B. Temperatur, Lösungsmittel, pH) also nur abhängig von der Art der absorbierenden Substanz und der Wellenlänge $(\lambda)$.

Wenn die optische Pfadlänge (d) und die chemische Substanz bekannt sind (also $\varepsilon$), kann die unbekannte Konzentration (c) einer Substanz durch Messung der Extinktion (E) bei spezifischer Wellenlänge bestimmt werden.

Daraus ergibt sich, dass bei einer bestimmten Konzentration c eines bestimmten Analyten die Empfindlichkeit des Messung für ein bestimmtes Detektorsystem im Idealfall ausschließlich von der optischen Pfadlänge der durchstrahlten Probe, im Regelfall der Schichtdicke der Messküvette, abhängt. Somit kann die Empfindlichkeit für eine bestimmte Substanz in einer Messvorrichtung bei dem gleiche Detektorsystem nur durch Erhöhung der optischen Pfadlänge, bzw. der Küvettenlänge d gesteigert werden.

Entsprechende Küvetten in beliebiger Länge und aus beliebigen Materialien, welche mit entsprechend vorgefertigten und leicht anzubringenden Küvetten-Endstücken ausgestattet sind, sind im Stand der Technik bekannt. Diese Küvetten-Endstücke in Form von Normschliffkernen sind mit integrierten Ein- bzw. Auskoppeloptiken und Lichtwellenleiteranschlüssen oder Lichtquellen und Detektoren ausgestattet, so dass die Küvettenlänge leicht an das Messsystem, bzw. den zu messenden Analyten angepasst werden kann (DE 20 2012 003 739 U1).

Die Änderung der optischen Pfad- bzw. Küvettenlänge ist jedoch nicht immer möglich oder vorteilhaft, insbesondre dann, wenn z. B. für hohe erforderliche Extinktionen bei niedrigen Analyt-Konzentrationen, die dann notwendige große Küvettenlänge aus Platzgründen oder anderen technischen Gründen nicht realisierbar ist. Umgekehrt kann es auch bei bestimmten Analyten in bestimmten Konzentrationsbereichen und bestimmten Detektorsystemen erforderlich sein, die optische Pfadlänge stark verkürzen zu müssen, um verwertbare Messergebnisse zu erhalten. Auch in diesem Fall kann einer beliebigen Verkürzung der Küvettenlänge technische Grenzen gesetzt sein.

Es bestand somit die Aufgabe der vorliegenden Erfindung, eine spektroskopische Vorrichtung und ein Verfahren zur quantitativen und/oder qualitativen Messung von Analyten unter Verwendung einer solchen Vorrichtung zur Verfügung zu stellen, welche bei einer gewünschten vorgegebenen Küvettenlänge in einem vorgegebenen optischen Messsystem eine Änderung der Empfindlichkeit bzw. der Extinktion, insbesondere der Erhöhung der Empfindlichkeit/Extinktion und damit eine Senkung der Nachweisgrenze für einen bestimmten Analyten in diesem Messsystem zur Folge hat.

Weiterhin bestand die Aufgabe der vorliegenden Erfindung, eine spektroskopische Vorrichtung und ein Verfahren zur quantitativen und/oder qualitativen Messung von Analyten unter Verwendung einer solchen Vorrichtung zur Verfügung zu stellen, welche eine Veränderung der Küvettenlänge, vorzugsweise eine Verkürzung der derselben, ermöglicht, ohne dass sich eine vorgegebene Empfindlichkeit des gleichen Messsystems ändert.

Die Aufgaben wurden durch die erfindungsgemäße Vorrichtung, wie sie in den Ansprüchen und im Folgenden beschrieben ist, gelöst. Es wurde nämlich gefunden, dass man die Empfindlichkeit eines vorgegebenen Messsystems mit einer definierten optischen Pfadlänge signifikant verändern kann, wenn man den gas- oder dampfförmigen Analyt entweder komprimiert, also mit höheren Druck als Normaldruck, oder aber entspannt, also mit niederen Druck als Normaldruck, in die Messküvette einbringt.

Dazu muss eine druckstabile Messküvette, beispielsweise aus Stahl, bereitgestellt werden, welche Ein- und Auslassöffnungen zum Einbringung und zur Abführung des gasförmigen Analyten unter veränderbaren Druckbedingungen vorsieht. Mittels einer Kompressor-Vorrichtung oder einer Unterdruck erzeugenden Vorrichtung kann so der Analyt mit einer festgelegten Druckdifferenz gegenüber dem Normaldruck in der Messküvette bereitgestellt werden.

Gegenstand der Erfindung ist somit eine mit variabler Empfindlichkeit betreibbare Vorrichtung zur spektroskopischen Bestimmung der chemischen, physikalischen oder physikochemischen Eigenschaften eines vorzugsweise gas- oder dampfförmigen Analyten, im Wesentlichen umfassend: (i) eine vorzugsweise polychromatische Lichtquelle, (ii) eine spezielle Küvette zur Aufnahme des Analyten, welche mit dem Licht der Lichtquelle durchstahlt wird, (iii) ein zur spektrometrischen Analyse des transmittierten, reflektierten oder emittierten Lichts befähigtes Detektorsystem, sowie (iv) Vorrichtungen zur automatischen, vorzugsweise elektronischen Erfassung und Auswertung der Messdaten. Dabei ist erfindungsgemäß der Küvettenraum in Form eines druckstabilen Rohrs ausgebildet, an dessen einem Ende die Lichtquelle und an dem gegenüberliegenden Ende das Detektorsystem, angeordnet ist. Alternativ kann an einem Ende sowohl eine Lichtquelle als auch ein Detektorsystem und an dem gegenüberliegenden Ende eine Spiegelanordnung angeordnet sein. Der Proben- oder Küvettenraum ist mit regulierbaren Einlass- und Auslassöffnungen zur variablen Druckbeaufschlagung und Druckentlastung mit dem gasförmigen Analyten ausgestattet. Wesentlich ist, dass während des Messbetriebs in der Messküvette ein Druck vorgesehen wird, der höher oder niedriger, vorzugsweise höher, ist als der Atmosphärendruck.

Es ist an sich bekannt, dass der Druck innerhalb einer Probe Einfluss (z. B. Lorenzverbreiterung / solvatochrome Effekte) auf das spektrale Absorptions- und Emissionsverhalten der in der Probe enthaltenen Teilchen hat, was normalerweise unter anderem bei einer Kalibration des verwendeten Messgeräts mit berücksichtigt werden muss. Diese Erfindung erlaubt es, diese Effekte darüber hinaus zu einer Empfindlichkeitsänderung zu nutzen.

Die hier vorgestellte Erfindung bietet somit die Möglichkeit, die erfassbare Analyt-Konzentration durch Druckerhöhung oder Druckreduzierung relativ zu einem Ausgangsdruck zu variieren, insbesondere zu erhöhen, und damit die Empfindlichkeit eines (gegebenen) Messsystems als Ganzes zu verändern, vorzugsweise zu steigern.

Gegenstand der Erfindung ist folglich auch ein Verfahren zur Messung der Konzentration, vorzugsweise ein Verfahren zur Steigerung der Empfindlichkeit der Konzentrationsmessung, eines gas- oder dampfförmigen Analyten mittels eines spektroskopischen Messvorrichtung, welche eine druckstabile Messküvette mit einer vorgegebenen definierten optischen Pfadlänge umfasst, wobei man den gasförmigen Analyten mit einem gegenüber Normaldruck geänderten Druck, vorzugsweise mit einem definierten Überdruck, beispielsweise dem 2 - 20 fachen Druck des Normaldrucks, beaufschlagt und in die druckstabile Messküvette einbringt, wodurch eine Empfindlichkeitssteigerung erzielt werden kann, die exponentiell zum eingestellten Druck in der Messküvette ist. Dadurch ist es möglich, die Nachweisgrenze des Analyten um etwa den Faktor 2 - 50, vorzugsweise 2 - 20, je nach beaufschlagtem Druck gegenüber Normaldruck, abzusenken.

Prinzipiell lässt sich das erfindungsgemäße Verfahren auch mit Drucken von mehreren Hundert bar bis weit über 1000 bar betreiben, wodurch entsprechende Empfindlichkeitssteigerungen erreicht werden können.

Wie bereits erwähnt, ist es erfindungsgemäß auch möglich, die optische Pfadlänge der Messküvette mit dem druckveränderten gasförmigen Analyt zu verändern, insbesondere zu verkleinern, ohne dabei Einbußen an der Empfindlichkeit unter sonst gleichen Bedingungen zu erleiden.

Gegenstand der Erfindung ist also auch ein Verfahren zur der Konzentrationsmessung eines gasförmigen Analyten mittels einer spektroskopischen Messvorrichtung mit einer druckstabilen Messküvette, in welche der gasförmige Analyt unter einem Druck, welcher beispielsweise dem 2 - 20 fachen Druck des Normaldrucks entspricht, eingebracht wurde, und die eine gegenüber der Messung bei Normaldruck verkürzte optischen Pfadlänge besitzt. Eine bestimmte Empfindlichkeit der Messvorrichtung gegenüber dem zu messenden Analyten, welche bei erhöhtem Druck gemessen werden kann, entspricht dann der Empfindlichkeit des gleichen Messsystems unter Normaldruck, jedoch unter Verwendung einer Messküvette von entsprechend längerer optischer Pfadlänge.

Da bei vorausgesetzter konstanter Temperatur und konstantem Volumen die Stoffmenge eines (idealen) Gases proportional dem Druck p ist, kann das Lambert-Beer Gesetz wie folgt geschrieben werden:

$$I_1 = I_0 \times e^{-(\varepsilon \times p \times d)}.$$

Um die Empfindlichkeit eines auf spektraler Absorption beruhenden Messsystems um beispielsweise den Faktor 10 zu steigern, ist demnach die Verlängerung der optischen Pfadlänge des Messsystems um den Faktor 2.3 nötig (In 10).

Die große messtechnische Bedeutung dieser physikalischen Formel offenbart sich erfindungsgemäß also im Verhältnis der die Detektoren erreichenden Lichtintensitäten: $I_{p0} / I_{p1}$. Aus dem Lambert-Beer Gesetz ergibt sich damit, dass das Verhältnis der gemessenen Lichtintensitäten $I_{p0} / I_{p1}$ proportional zu $e^{p_1 - p_0}$ ist, wobei $p_0$ der Normaldruck ist und $p_1$ den Druck des Analyt in der Messküvette darstellt.

Die Tabelle 1 stellt den Zusammenhang zwischen dem Verhältnis $I_{p0} / I_{p1}$ und der Druckdifferenz, dar, wobei $p_0$ den Atmosphärendruck von 1 bar bedeutet, und $p_1$ den Druck des komprimierten gasförmigen Analyten angibt. Wie zu ersehen ist, sind diese Verhältnisse proportional zur Empfindlichkeitssteigerung Druck beaufschlagter Küvetten. Ein z. B. mit 8 bar betriebenes Messsystem (Druckdifferenz 7 bar) ist um den Faktor 1096 empfindlicher als ein atmosphärisch betriebenes Messsystem.

Tab. 1:

| Druck (bar) | Druckdifferenz p1 - p0 (bar) | Empfindlichkeit ($e^{p_1 - p_0}$) |
|---|---|---|
| 1 | 0 | 1 |
| 2 | 1 | 2,72 |
| 3 | 2 | 7,39 |
| 4 | 3 | 20,09 |
| 5 | 4 | 54,60 |
| 6 | 5 | 148,41 |
| | | |
| 7 | 6 | 403,43 |
| 8 | 7 | 1096,63 |
| 9 | 8 | 2980,96 |
| 10 | 9 | 8103,08 |
| 11 | 10 | 22026,47 |
| 12 | 11 | 59874,14 |
| 13 | 12 | 162754,79 |
| 14 | 13 | 442413,39 |

(fortgesetzt)

| Druck (bar) | Druckdifferenz p1 - p0 (bar) | Empfindlichkeit ($e^{p_1 - p_0}$) |
|---|---|---|
| 15 | 14 | 1202604,28 |
| 16 | 15 | 3269017,37 |
| 17 | 16 | 8886110,52 |
| 18 | 17 | 24154952,75 |
| 19 | 18 | 65659969,14 |
| 20 | 19 | 178482300,96 |

Eine weitere messtechnische Bedeutsamkeit der vorgeschlagenen Erfindung besteht, wie bereits genannt, in der Möglichkeit, die optische Pfadlänge und damit die Küvettenlänge bei konstant gehaltener Empfindlichkeit deutlich kürzer gestalten zu können.

In Tabelle 2 ist aufgetragen, um welchen Faktor die optische Pfadlänge d gegenüber einer Messung mit atmosphärischem Druck bei gleicher Empfindlichkeit verkürzt werden kann. Der Zusammenhang ergibt sich gemäß: $p_1 \times d_1 = p_0 \times d_0$, bzw. $d1 = p_0 \times d_0 / p_1$

Bei einem z.B. mit 10 bar betriebenen Messsystem (Druckdifferenz 9 bar) kann somit um die gleiche Empfindlichkeit wie unter Normaldruck zu erzielen, die Länge der Messküvette auf 1 /10 verkürzt werden. Oder anders ausgedrückt: ein mit 10 bar betriebenes Messsystem besitzt etwa die gleiche Empfindlichkeit wie ein atmosphärisch betriebenes ansonsten gleiches System, jedoch mit zehnfacher optischer Pfadlänge.

Tab. 2:

| Druck (bar) | Druckdifferenz p1 - p0 (bar) | Pfadlänge $d_1$ (bei $d_0 = 1$): |
|---|---|---|
| 1 | 0 | 1 |
| 2 | 1 | 0,5 |
| 3 | 2 | 0,33333333 |
| 4 | 3 | 0,25 |
| 5 | 4 | 0,2 |
| 6 | 5 | 0,16666667 |
| 7 | 6 | 0,14285714 |
| 8 | 7 | 0,125 |
| 9 | 8 | 0,11111111 |
| 10 | 9 | 0,1 |
| 11 | 10 | 0,09090909 |
| 12 | 11 | 0,08333333 |
| 13 | 12 | 0,07692308 |
| 14 | 13 | 0,07142857 |
| 15 | 14 | 0,06666667 |
| 16 | 15 | 0,0625 |
| 17 | 16 | 0,05882353 |
| 18 | 17 | 0,05555556 |
| 19 | 18 | 0,05263158 |
| 20 | 19 | 0,05 |

Die erfindungsgemäße Vorrichtung besitzt vorzugsweise eine Breitband-Lichtquelle mit einem Wellenlängenbereich von vorzugsweise 180 - 2700 nm. Die Lichtquelle kann Lichtwellenleiter und entsprechende Optiken mit einschließen. In einer Ausführung der Erfindung können die Lichtwellenleiteranschlüsse durch geeignete integrierte Lichtquellen bzw., gegenüberliegend, durch integrierte Detektoren ersetzt sein. Als Detektorsystem können Absorptions- oder Emissions-Spektrometer für sichtbares Licht, oder für IR-, UV- oder Röntgenstrahlung, oder auch Raman-Spektrometer vorgesehen werden.

Als Optiken können Ein- und/oder Auskoppeloptiken oder andere optische oder optoelektronische Mittel zur Optimierung und Regelbarkeit des den Probenraum durchquerenden Lichts eingesetzt werden. Derartige optische Mittel sind an sich im Stand der Technik bekannt. Mittels Systemkalibrierung, unter Benutzung definierter Standards (z.B. optische Filters oder Trübungsstandards) oder mittels in ihren Eigenschaften bekannten Referenzproben kann die erfindungsgemäße Vorrichtung für qualitative und quantitative Analysen genutzt werden.

Das Messfluid wird durch geeignete regulierbare Prozessanschlüsse geführt, welche vorzugsweise an gegenüberliegenden Enden des druckstabilen Rohres angebracht sind. Dazu ist zweckmäßigerweise eine Vorrichtung zur vorzugsweise automatischen Bereitstellung des Analyten und / oder zur Erhöhung der Analyt-Konzentration in der zu messenden Probe vorzusehen. Die Prozessanschlüsse, bzw. die Vorrichtung zur Bereitstellung des gasförmigen Analyten sind erfindungsgemäß mit einer druckerzeugenden Einrichtung, beispielsweise mit einem im Stand der Technik üblichen Kompressor oder einem Pneumatik-Zylinder verbunden.

Die Messküvette der erfindungsgemäßen Vorrichtung ist vorzugsweise ein Metallrohr, vorzugsweise aus Stahl in der Regel mit einer beliebigen Länge, beispielsweise von 5 - 200 cm, vorzugsweise 10 - 100 cm. Die Rohre, sowie die optischen und weiteren Anschlüsse sollten druckmäßig so ausgelegt sein, dass Drucke > 10 bar, vorzugsweise > 20 bar, oder auch > 200 bar möglich sein können. Auch können mehrerer Rohre druckdicht hintereinander geschaltet werden.

Wie bereits erwähnt, kann es auch erforderlich sein, den Gasdruck des Analyten gegenüber dem Normaldruck nicht zu erhöhen, sondern zu erniedrigen, beispielsweise, wenn es nicht möglich oder aufwendig ist, die Küvettenlänge zu verkürzen. In diesem Fall kann anstelle einer Kompressionsvorrichtung eine Vorrichtung zur Erzeugung eines Unterdrucks an die erfindungsgemäße Messvorrichtung angeschlossen werden.

Es ist erfindungsgemäß vorteilhaft, die als Probenraum / Messküvette dienenden Rohre beliebiger Länge und beliebigen Materials mit vorgefertigten Endstücke (sogenannte "OSFIA"- Köpfe) zu versehen und somit Küvetten nahezu beliebiger optischer Weglänge herzustellen. In ihrer einfachsten Ausführung bestehen diese Endstücke aus einem Konus, innerhalb dessen eine Lichtwellenleiterkupplung und eine Ein- bzw. Auskoppeloptik eingebaut ist. Beispielsweise können zwei dieser Koni, ein erster mit Lichtwellenleiteranschluss und Einkoppeloptik und ein zweiter mit Lichtwellenleiteranschluss und Auskoppeloptik, mit den vorderen bzw. hinteren Hülsen eines Rohres mit zur Messaufgabe passender Länge verbunden werden. Lichtwellenleiteranschlüsse können dann in bekannter Art und Weise mit einer Lichtquelle bzw., auf gegenüberliegender Seite, mit einem Detektor (z. B. Spektrometer) gekoppelt werden. Vorzugsweise besitzen die Koni Normschliff- Kernabmessungen (z. B. NS 29/32) mit entsprechenden Normschliff- Hülsen, sodass ggf. mehrere druckstabile Rohre hintereinander gesteckt werden und druckdicht verspannt werden und so das Messsystem komplettieren.

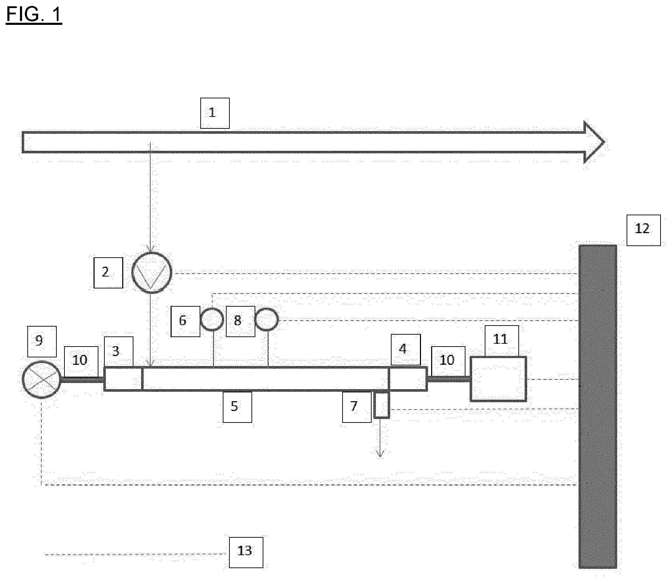

FIG. 1 zeigt schematisch den Aufbau einer Ausführungsform der erfindungsgemäßen Vorrichtung zur Erhöhung der Empfindlichkeit der Messung eines gasförmigen Analyten.

Ein Stahlrohr / Probenraum (5) mit einer definierten Länge (z.B. 1m) ist an einem (linken) Ende mit einem Kompressor-Anschluss (2) versehen, durch welchen der gasförmige Analyt (1) ins Innere des Stahlrohrs unter Druck eingebracht werden kann. Ferner weist das Stahlrohr eine Auslassventil (7) (z.B. ein Magnetventil) am anderen (rechten) Ende auf.

Das Stahlrohr ist weiterhin mit einem Manometer (6) zur Messung des Druckes im Innenraum sowie zweckmäßigerweise mit einem Thermometer (8) versehen.

An einem (linken) Ende steht der Probenraum in funktioneller Verbindung mit einer Lichtquelle (9) sowie einem Lichtwellenleiter (10) und einer Einkoppeloptik (3), welche die Aufgabe hat, das einstrahlenden Licht der Lichtquelle zu bündeln. Am gegenüberliegenden (rechten) Ende des Stahlrohrs (5) ist wiederum eine Lichtwellenleiter (10) mit vorgeschalteter Auskoppeloptik (4) vorgesehen.

Ein nachgeschalteter Sensor (11) misst das auftreffende Licht der Lichtquelle (9). Der Analyt (1) durchströmt im gezeigten Bild das Innere des Stahlrohrs (5) von links nach rechts, wie durch den Pfeil angegeben.

Die für die Funktion und Erfassung der Messdaten relevanten Teile der Vorrichtung (2), (9), (6), (8), (7) und (11) sind über Datenleitungen (13) an einen mit einer Kontroll (SCADA) - und Steuersoftware ausgestatteten Computer (12) angeschlossen.

**Patentansprüche**

1. Mit variabler Empfindlichkeit betreibbare Vorrichtung zur spektroskopischen Bestimmung der chemischen, physikalischen oder physikochemischen Eigenschaften eines gas- oder dampfförmigen Analyten, im Wesentlichen umfassend:

- eine breitbandige Lichtquelle,
- ein als Messküvette dienender Probenraum zur Aufnahme des Analyten, welcher mit dem Licht der Lichtquelle durchstahlt wird,
- ein zur spektrometrischen Analyse des transmittierten, reflektierten oder emittierten Lichts befähigtes Detektorsystem, sowie
- Vorrichtungen zur automatischen Erfassung und Auswertung der Messdaten,

**dadurch gekennzeichnet dass,**
der Probenraum in Form eines druckstabilen Rohrs ausgebildet ist, an dessen einem Ende die Lichtquelle und an dem gegenüberliegenden Ende das Detektorsystem angeordnet ist, und das regulierbare Einlass- und Auslassöffnungen aufweist zur variablen Druckbeaufschlagung und Druckentlastung des Probenraums mit dem gasförmigen Analyten, wobei der eingestellte Druck im Probenraum während des Messbetriebs höher oder niedriger, vorzugsweise höher ist als der Normaldruck.

2. Vorrichtung zur spektroskopischen Bestimmung eines gas- oder dampfförmigen Analyten nach Anspruch 1, **dadurch gekennzeichnet, dass** die Breitband-Lichtquelle mit Ein- und/oder Auskoppeloptiken oder anderer optischer oder optoelektronischer Mittel zur Optimierung und Regelbarkeit des den Probenraum durchquerenden Lichts ausgestattet ist.

3. Vorrichtung zur spektroskopischen Bestimmung eines gas- oder dampfförmigen Analyten nach Anspruch 1 oder 2, **dadurch gekennzeichnet, dass** für Lichtquelle und Detektorsystem Lichtwellenleiter vorgesehen sind.

4. Vorrichtung zur spektroskopischen Bestimmung eines gas- oder dampfförmigen Analyten nach einem der Ansprüche 1 - 3, **dadurch gekennzeichnet, dass** der druckstabile rohrförmige Probenraum ein definierte Länge von 5 bis 200 cm aufweist.

5. Vorrichtung zur spektroskopischen Bestimmung eines gas- oder dampfförmigen Analyten nach einem der Ansprüche 1 - 4, **dadurch gekennzeichnet, dass** als breitbandige Lichtquelle Licht mit einem Wellenlängenbereich von 180 - 2700 nm vorgesehen ist.

6. Vorrichtung zur spektroskopischen Bestimmung eines gas- oder dampfförmigen Analyten nach einem der Ansprüche 1 - 5, **dadurch gekennzeichnet, dass** sie eine Vorrichtung zur automatischen Bereitstellung des Analyt und / oder zur Erhöhung der Analyt-Konzentration in der zu messenden Probe aufweist.

7. Vorrichtung zur spektroskopischen Bestimmung eines gas- oder dampfförmigen Analyten nach einem der Ansprüche 1 - 6, **dadurch gekennzeichnet, dass** der als Messküvette dienender Probenraum für Drucke bis mindestens 200 bar.

8. Vorrichtung zur spektroskopischen Bestimmung eines gas- oder dampfförmigen Analyten nach einem der Ansprüche 1 - 7, **dadurch gekennzeichnet, dass** der gas- oder dampfförmige Analyt Teil eines Schutzgases oder von Luft ist.

9. Vorrichtung zur spektroskopischen Bestimmung eines gas- oder dampfförmigen Analyten nach einem der Ansprüche 1 - 8, **dadurch gekennzeichnet, dass** als Detektorsystem ein Raman-Spektrometer oder Absorptions- oder Emissions-Spektrometer für sichtbares Licht, oder für IR-, UV- oder Röntgenstrahlung vorgesehen ist.

10. Verfahren zur Steigerung der Empfindlichkeit der Konzentrationsmessung eines gas- oder dampfförmigen Analyten mittels eines spektroskopischen Messvorrichtung, welche eine druckstabile Messküvette mit einer definierten optischen Pfadlänge umfasst, **dadurch gekennzeichnet, dass** man den gasförmigen Analyten mit einem definierten Überdruck beaufschlagt und in die druckstabile Messküvette einbringt, wobei die dadurch erzielte Empfindlichkeitssteigerung exponentiell zum eingestellten Druck in der Messküvette ist.

11. Verfahren nach Anspruch 10, **dadurch gekennzeichnet, dass** bei gleicher optischer Pfadlänge und erhöhten Druck des gas- oder dampfförmigen Analyten in der Messküvette eine Senkung der Nachweisgrenze um den Faktor 2 - 20 je nach beaufschlagtem Druck gegenüber Normaldruck erzielt wird.

**12.** Verfahren nach Anspruch 10 oder 11, **dadurch gekennzeichnet, dass** eine Vorrichtung gemäß der Ansprüche 1 - 9 eingesetzt wird.

**13.** Verfahren zur Messung der Konzentration eines gasförmigen Analyten mittels einer spektroskopischen Messvorrichtung, **dadurch gekennzeichnet dass** man die Messung in einer Vorrichtung gemäß der Ansprüche 1 - 9 durchführt, und in der Messküvette ein Druck des gasförmigen Analyten eingestellt wird, welcher dem 2 - 20 fachen Druck des Normaldrucks entspricht, wodurch bei vorgegebener definierter optischer Pfadlänge der Messküvette eine exponentiell erhöhte Empfindlichkeit der Messvorrichtung und damit eine niedrigere Nachweisgrenze des Analyten im Vergleich zur Messung unter Normaldruck erzielt wird, und die so erzielbaren besten Werte bei einer vergleichbaren Messung unter Normaldruck nur unter Verwendung einer entsprechend längeren optischen Pfadlänge erreicht werden können.

FIG. 1

Europäisches
Patentamt

European
Patent Office

Office européen
des brevets

## EUROPÄISCHER RECHERCHENBERICHT

**Nummer der Anmeldung**

**EP 22 02 0099**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 01/27596 A1 (NOK CORP [JP]; SHIRAKAWA HIROSHI [JP]; YAMASHITA KAZUO [JP]) 19. April 2001 (2001-04-19) * Absätze [0056] - [0059], [0064], [0065], [0082] - [0092]; Abbildungen 3,11 * ----- | 1-13 | INV. G01N21/03 ADD. G01N21/3504 G01N21/33 G01N21/65 G01N23/083 |
| X | US 2003/098419 A1 (JI BING [US] ET AL) 29. Mai 2003 (2003-05-29) * Absätze [0044], [0049] - [0070]; Abbildung 1 * ----- | 1-13 | |
| X | US 2003/015019 A1 (O'BRIEN ROBERT [US]) 23. Januar 2003 (2003-01-23) * Absätze [0027], [0162] - [0177]; Abbildung 2 * ----- | 1-13 | |

**RECHERCHIERTE SACHGEBIETE (IPC)**

**G01N**

Der vorliegende Recherchenbericht wurde für alle Patentansprüche erstellt

| Recherchenort | Abschlußdatum der Recherche | Prüfer |
|---|---|---|
| **München** | **22. Juli 2022** | **Duijs, Eric** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 02 0099

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-07-2022

| Im Recherchenbericht angeführtes Patentdokument | Datum der Veröffentlichung | Mitglied(er) der Patentfamilie | Datum der Veröffentlichung |
|---|---|---|---|
| WO 0127596 A1 | 19-04-2001 | AU 7683700 A<br>JP 2004239611 A<br>WO 0127596 A1 | 23-04-2001<br>26-08-2004<br>19-04-2001 |
| US 2003098419 A1 | 29-05-2003 | TW 561543 B<br>US 2003098419 A1 | 11-11-2003<br>29-05-2003 |
| US 2003015019 A1 | 23-01-2003 | AU 782271 B2<br>AU 2005222549 A1<br>CA 2431615 A1<br>EP 1257813 A1<br>JP 2003521688 A<br>US 2003015019 A1<br>WO 0155714 A1 | 14-07-2005<br>10-11-2005<br>02-08-2001<br>20-11-2002<br>15-07-2003<br>23-01-2003<br>02-08-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202012003739 U1